# DEMANDE DE BREVET EUROPEEN

(11) **EP 0 918 187 A1**
(43) Date de publication de la demande: **26.05.1999**
(21) Numéro de dépôt: 98402771.4
(22) Date de dépôt: 09.11.1998
(51) Int. Cl.: F16L 41/00, F16L 41/08

(54) **Disposition pour le raccordement d'une canalisation sur un appareil**

(30) Priorité: 20.11.1997 FR 9714567
(71) Demandeur: ALCATEL, 75008 Paris (FR)
(72) Inventeur: Gevaud, Roland, 74370 Argonay (FR)
(74) Mandataire: Buffière, Michelle

(57) **Abrégé**

Disposition pour le raccordement d'une canalisation (4) à un orifice (3) d'un appareil (1), caractérisée en ce qu'autour dudit orifice (3) est ménagé un évidement (5) laissant au centre un embout mâle (6) percé d'un canal (2) aboutissant audit orifice, l'extrémité dudit embout étant conique (7), un moyen (8 ; 12-17 ; 18 ; 21) étant monté sur l'extrémité à raccorder de la canalisation (4) coopérant avec des moyens de la paroi périphérique (10) dudit évidement pour maintenir l'extrémité de la canalisation appliquée contre ladite partie conique dudit embout (6).

## Description

La présente invention concerne une disposition pour le raccordement d'une canalisation sur un appareil.

L'invention s'applique en particulier dans des appareils tels que des détecteurs de fuites ou pour des circuits hydrauliques ou pneumatiques.

Il est fréquent, en effet, d'avoir à relier certains composants ou sous-ensembles d'appareils industriels par des canalisations. Par exemple, dans un détecteur de fuite à hélium, on peut avoir un bloc principal sur lequel sont reliées des pompes, des vannes, etc... Certains de ces composants ou sous-ensembles sont parfois reliés entre eux par des canalisations. il est ainsi connu d'utiliser, pour raccorder une canalisation à un élément quelconque d'un appareil, une pièce de raccordement qui, d'un côté se visse dans un trou taraudé de l'élément et qui, de l'autre côté, comporte une extrémité en partie conique sur laquelle est enfoncé le tube qui s'expanse légèrement radialement, et qui est bloqué par un écrou se vissant extérieurement sur la pièce de raccordement. Lorsqu'une étanchéité est nécessaire, celle-ci est faite, du côté où la pièce est vissée sur l'élément, soit par un joint, soit par une colle interposée entre le filetage de la pièce de raccordement et le taraudage de l'élément.

Ceci présente plusieurs inconvénients : tout d'abord, une telle pièce de raccordement prend de la place, et en outre, le fait d'utiliser une pièce de raccordement vissée dans un trou taraudé de l'élément, ou d'un appareil, entraîne que l'intérieur du circuit est en contact direct avec le taraudage. Ainsi, lors du vissage de la pièce de raccordement, ou lorsque l'on change cette pièce de raccordement, des particules métalliques, ou des particules de colle, peuvent migrer vers l'intérieur du circuit. Ceci est très gênant dans tous les appareils sous vide, mais également dans les appareils véhiculant certains fluides liquides ou gazeux. Dans les appareils sous vide tels que les détecteurs de fuite à hélium existe, en plus, l'inconvénient d'une absorption éventuelle de gaz dans la colle ou le joint ou leur emprisonnement dans des espaces mal collés, ce qui provoque un résiduel d'hélium élevé.

La présente invention a ainsi pour but de pallier les inconvénients ci-dessus et a pour objet une disposition pour le raccordement d'une canalisation à un orifice d'un appareil, caractérisée en ce qu'autour dudit orifice est ménagé un évidement laissant au centre un embout mâle percé d'un canal aboutissant audit orifice, l'extrémité dudit embout étant conique, un moyen étant monté sur l'extrémité à raccorder de la canalisation coopérant avec des moyens de la paroi périphérique dudit évidement pour maintenir l'extrémité de la canalisation appliquée contre ladite partie conique dudit embout.

Selon une première réalisation, ladite canalisation est souple, ledit embout pénétrant dans l'extrémité de ladite canalisation.

Selon une autre réalisation, applicable en particulier pour les circuits hydrauliques ou pneumatiques, ladite canalisation est rigide et comporte à son extrémité un élargissement conique formant collet venant s'appliquer contre la partie conique dudit embout.

On va maintenant donner la description de quelques exemples de mise en oeuvre de l'invention en se référant au dessin annexé dans lequel :

La figure 1 montre une première réalisation de la disposition de raccordement d'une canalisation sur un appareil selon l'invention.

La figure 2 montre une première variante de l'invention.

Les figures 3 et 4 montrent séparément deux pièces entrant dans le montage de la figure 2.

La figure 5 montre une seconde variante de l'invention.

Les figures 6 et 7 montrent, respectivement, en vue de face et de dessous, la pièce de blocage utilisée dans le montage de la figure 5.

La figure 8 est une troisième variante de l'invention, utilisable, en particulier, dans le cas de canalisations rigides.

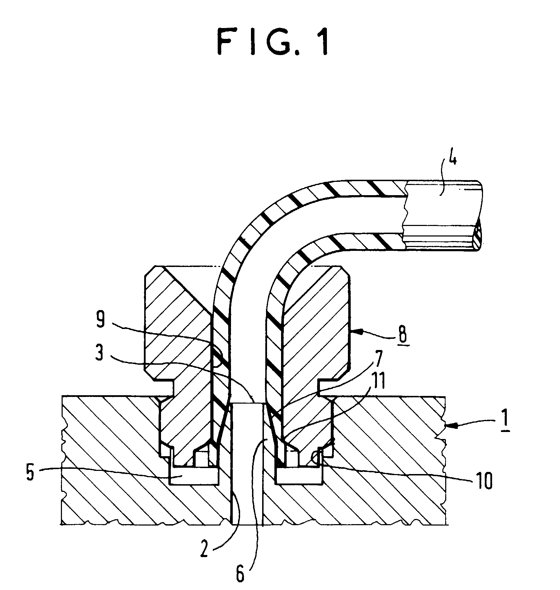

En se référant à la figure 1, on voit une portion d'un appareil 1. Il s'agit, par exemple, d'un élément d'un détecteur de fuite à hélium tel qu'un bloc vide principal, ou un autre composant : pompe, vanne...., comportant au moins un canal interne 2 aboutissant à un orifice 3 auquel on veut raccorder une canalisation 4.

Dans le cas de l'exemple décrit, s'appliquant à un détecteur de fuite, la canalisation 4 est en matière plastique souple.

Conformément à l'invention, un évidement 5 est ménagé autour de l'orifice 3 laissant au centre un embout mâle 6 traversé par le canal 2. L'extrémité 7 de l'embout mâle est conique. Le raccordement est effectué par pénétration de l'embout mâle 6 dans l'extrémité de la canalisation 4 qui subit une légère expansion. Le blocage de la canalisation est effectué par le moyen d'un écrou 8 à trou central 9, monté sur la canalisation et venant se visser extérieurement dans la paroi périphérique 10, taraudée, de l'évidement 5. Le trou central porte une arête 11 à son extrémité inférieure qui, compte tenu de l'expansion du tube sur la partie conique, vient pénétrer dans la paroi du tube et assure ainsi un efficace frein d'écrou.

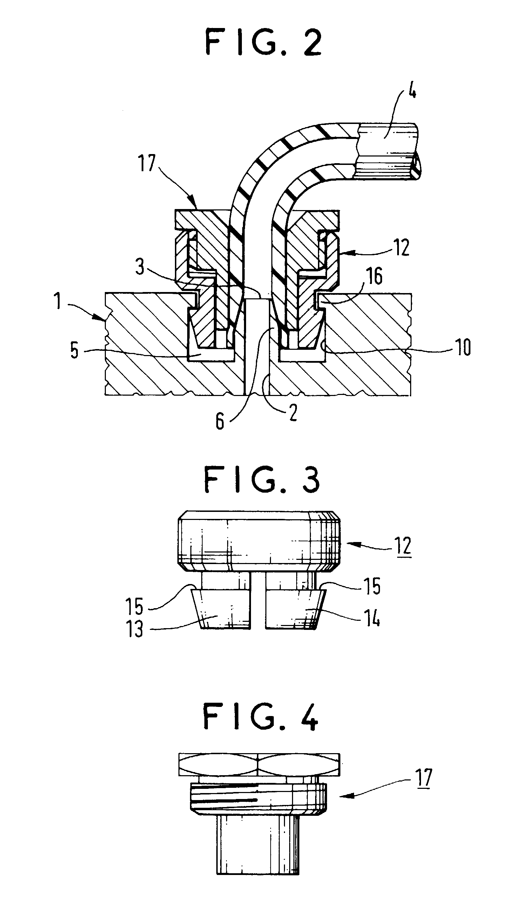

Les figures 2, 3 et 4 montrent une variante de réalisation dans laquelle le moyen de blocage utilisé comprend ici deux pièces : a) une embase 12 fixée dans l'évidement 5 par accrochage de deux pattes semi-circulaires 13, 14 comportant chacune un épaulement 15 venant s'enclencher contre un redan 16 de la paroi périphérique 10 de l'évidement 5, b) un écrou 17 vissé dans l'embase 12 venant presser l'extrémité de la canalisation 4 en matière plastique, contre l'embout 6.

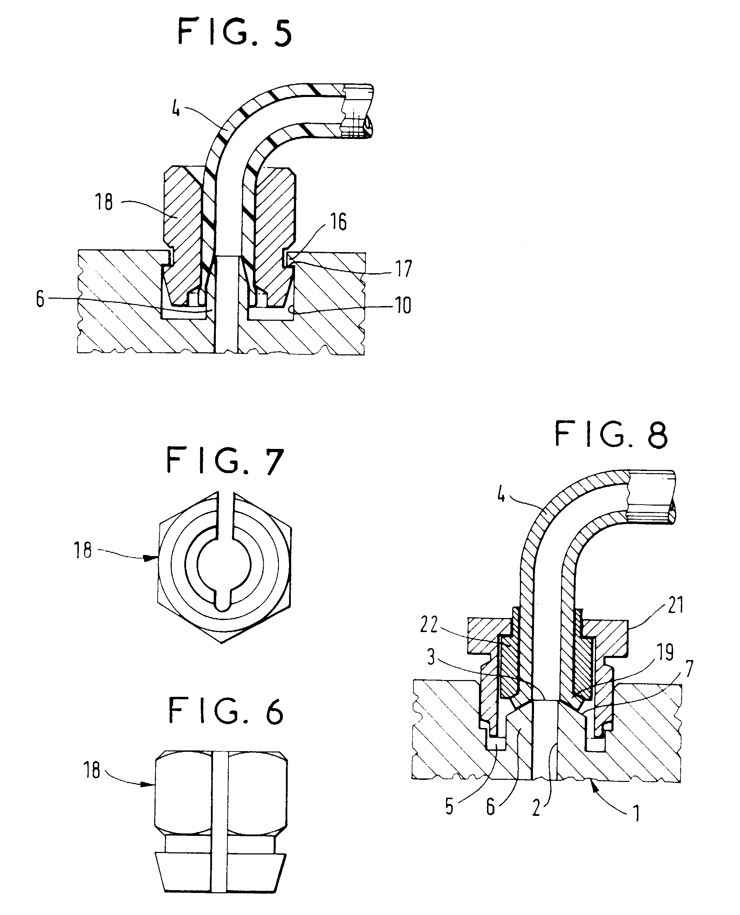

Les figures 5, 6 et 7 montrent une autre variante, dans laquelle le moyen de blocage comporte une unique douille fendue 18 venant serrer la canalisation 4 contre l'embout 6 et s'accrocher sous le redan 16 par un épaulement 17.

Enfin, la figure 8 montre une autre variante, intéressante dans le cas où la canalisation 4 est rigide, par exemple métallique, dans des applications pneumatiques ou hydrauliques par exemple.

L'extrémité de la canalisation porte un élargissement conique formant collet 19 venant s'appliquer contre la partie conique 7 de l'embout mâle 6. Le maintien est effectué par le moyen d'un écrou 21 venant se visser dans la paroi périphérique, taraudée, 10 de l'évidement 5 et appuyant une pièce d'appui 22 contre le collet 19.

Ainsi, grâce à l'invention, on supprime toute pièce intermédiaire de raccordement et on évite tout risque de salissures : particules métalliques, particules de colle séchée, etc.... dans l'intérieur des canalisations puisqu'il n'y a plus de fixation par vissage dans un orifice taraudé du circuit lui-même.

## Revendications

1. Disposition pour le raccordement d'une canalisation (4) à un orifice (3) d'un appareil (1), caractérisée en ce qu'autour dudit orifice (3) est ménagé un évidement (5) laissant au centre un embout mâle (6) percé d'un canal (2) aboutissant audit orifice, l'extrémité dudit embout étant conique (7), un moyen (8 ; 12-17 ; 18 ; 21) étant monté sur l'extrémité à raccorder de la canalisation (4) coopérant avec des moyens de la paroi périphérique (10) dudit évidement pour maintenir l'extrémité de la canalisation appliquée contre ladite partie conique dudit embout (6).

2. Disposition selon la revendication 1, caractérisée en ce que ladite canalisation (4) est souple, ledit embout (6) pénétrant dans l'extrémité de ladite canalisation (4).

3. Disposition selon la revendication 1, caractérisée en ce que ladite canalisation (4) est rigide et comporte à son extrémité un élargissement conique formant collet (19) venant s'appliquer contre la partie conique (7) dudit embout (6).

4. Disposition selon l'une des revendications 1 ou 2, caractérisée en ce que ledit moyen monté sur l'extrémité à raccorder de la canalisation est un écrou (8) venant se visser dans la paroi périphérique (10) taraudée, de l'évidement (5).

5. Disposition selon l'une des revendications 1 ou 2, caractérisée en ce que ledit moyen, monté sur l'extrémité à raccorder de la canalisation (4), comprend une embase (12) dans laquelle vient se visser un écrou (17) venant serrer l'embout mâle (6), ladite embase portant des épaulements (15) s'enclenchant contre un redan (16) de la paroi périphérique (10) de l'évidement (5).

6. Disposition selon l'une des revendications 1 ou 2, caractérisée en ce que ledit moyen, monté sur l'extrémité à raccorder de la canalisation (4), comprend une douille fendue (18) venant serrer la canalisation (4) contre l'embout mâle (6) et s'accrocher sous un redan (16) de la paroi périphérique (10) de l'évidement (5).

7. Disposition selon la revendication 3, caractérisée en ce que ledit moyen, monté sur l'extrémité à raccorder de la canalisation (4), comprend un écrou (21) venant appuyer une pièce d'appui (22) contre ledit collet (19) et se vissant dans la paroi périphérique (10) taraudée de l'évidement (5).
